# EUROPEAN PATENT SPECIFICATION

(11) **EP 3 481 573 B1**
(45) Date of publication and mention of the grant of the patent: **28.06.2023**
(21) Application number: 17736750.5
(22) Date of filing: 03.07.2017
(51) Int. Cl.: B23B 31/117, B23B 31/20, B23B 31/30

(54) **TOOL MOUNTING ASSEMBLIES AND METHODS OF OPERATION THEREOF**
MONTAGEZUSAMMENSETZUNG VN EINEM WERKZEUG UND VERWENDUNG
ASSEMBLAGE DE MONTAGE D'OUTIL ET UTILISATION

(30) Priority: 05.07.2016 GB 201611715
(43) Date of publication of application: 15.05.2019
(73) Proprietor: Fives Landis Limited, Keighley, Yorkshire BD20 7SD (GB)
(72) Inventor: MILLER, Glenn, Bedford Bedfordshire MK42 7JE (GB); TUCKER, Matthew, Bedford Bedfordshire MK42 7JE (GB)
(74) Representative: Sharrock, Daniel John
(86) International application number: PCT/GB2017/051955
(87) International publication number: WO 2018/007794

(56) References cited:
- EP-A1- 0 027 600
- WO-A1-02/05992
- DE-B3-102013 103 168
- GB-A- 833 048
- GB-A- 2 112 677
- JP-A- H1 128 604

## Description

### Field of the Invention

The present invention relates to tool mounting assemblies for coupling a tool to a rotary drive of a machine tool and methods of operation thereof.

### Background of the Invention

Assemblies used to locate and hold tools on machine tools need to locate the tool accurately in position on a repeated basis and have high stiffness. The assemblies need to be robust and suitable for use under challenging conditions where they may be rotated at high speeds, driven with considerable power and exposed to coolant at high pressure.

Existing clamping systems claim to offer high repeatability of positional accuracy but they have been found to be inadequate for highly stressed applications. They have also been found to possess inadequate stiffness for handling high process forces.

WO2008/054295 discloses a hydro-mechanical clamping device for releasably holding a tool shaft. A holder defines a chamber in which an annular piston is axially movable. Axial movement of the piston in a first direction produces radial compression of an inner sleeve and axial movement of the piston in a second direction opposite the first direction produces radial expansion of the inner sleeve. GB2112677 relates to an expansion device for axial and radial clamping of an annular member on a mandrel. A plurality of part-annular chambers may be acted upon independently of one another.

### Summary of the Invention

The present invention is directed at a tool mounting assembly for coupling a tool to a rotary drive of a machine tool, the assembly comprising: a mount having a longitudinal axis and axially inner and outer ends, the mount defining an engagement surface for engaging with a tool to be rotated about the longitudinal axis, and at least three independently expandable chambers within the mount for receiving a flowable material,
wherein each chamber is mechanically coupled to a respective portion of the engagement surface, such that an increase in the pressure within the chamber above a predetermined threshold expands the chamber, which causes the coupled portion of the engagement surface to move in a radial direction relative to the longitudinal axis.

According to the invention, the assembly includes an end plate and a fastening arrangement for fastening the end plate to the mount in order to retain a tool between an axially inwardly facing transverse surface of the end plate and a transverse surface of the mount.

Such a mounting assembly is able to hold a tool with high positional accuracy on a repeatable basis and afford high stiffness. High stiffness at the interface between a tool mounting assembly and the tool allows large process forces to be transmitted to the tool. The mounting assembly is also able to operate in challenging conditions. It may also be suitable for use in an automatic tool changing system.

In the known clamping device of WO2008/054295, a pressurised fluid is provided in an annular chamber. It has been found that in this configuration, the fluid is able to migrate circumferentially around the chamber and therefore move circumferentially around the clamping device, leading to instability. In the tool mounting assembly disclosed herein, at least three separate, independently expandable chambers are provided within the mount for receiving a flowable material. The flowable material is not able to flow or migrate from one chamber to another. This may provide a higher degree of stiffness and stability.

The pressure within each chamber may be tuned individually during the tool mounting process. This may provide a substantially uniform stiffness. It may produce a highly stable mounting arrangement, and micron level repeatability of tool positioning may be achieved.

Preferably, the coupled portions of the engagement surface are spaced apart around the engagement surface in a circumferential direction around the longitudinal axis. In some embodiments, they may be substantially equally spaced apart around the engagement surface in this circumferential direction.

In some embodiments, the mount may include more than three expandable chambers. If more than three chambers are present, an odd number of chambers is preferably provided.

Each chamber may have a respective pressure adjuster which is operable to adjust the pressure of a flowable material in the associated chamber. Alternatively, the pressure within each chamber may be individually adjusted by coupling each chamber to an external pump and adjusting the pressure of the material with the pump as appropriate.

In embodiments, the engagement surface may be a radially outwardly-facing surface and the radial direction in which the coupled portions of the engagement surface move is radially outwards. In this configuration, the assembly may be suitable for engaging with a tool located around the outside of the engagement surface. For example, the engagement surface may be cylindrical and coaxial with the longitudinal axis of the assembly. It may be suitable for engaging with a central opening of a grinding wheel for example.

The mount body may be in the form of a spindle nose for receiving a grinding wheel. In other embodiments, the mount body may in use be attached to a spindle nose of a rotary drive.

The assembly includes an end plate and a fastening arrangement for fastening the end plate to the mount in order to retain a tool between the end plate and the mount. Such an end plate may provide additional restraint of the tool. It may prevent a tool from de-mounting from the machine tool if the tool mounting assembly fails, as a safety measure. If a tool is able to separate from its mounting under high loads and under high speeds, this could represent a significant safety risk to an operator and could cause significant machine damage. Provision of an end plate further minimises this risk.

In further embodiments, the engagement surface may be an inwardly-facing surface with the radial direction of movement of the coupled portions of the engagement surface being radially inwards. In this way, the tool mounting assembly may be adapted to engage with a tool surface located adjacent to the inwardly-facing engagement surface, such as a shaft of a tool.

Each of the chambers may be defined by a mount body of the mount. The chambers may be machined out of the body material. Each chamber may be formed so as to leave a region of relatively thin material adjacent to the engagement surface of the mount. A wall of each chamber may form the respective coupled portion of the engagement surface, wherein the wall is resiliently deformable. The shape of the wall may be changed by varying the pressure within the associated chamber.

In further embodiments, each chamber is defined by a respective sub-assembly which is provided within the mount body. The mount body may define a cavity for each sub-assembly into which it is inserted.

Preferably, each coupled portion of the engagement surface chamber is elongated in the axial direction. This serves to enhance the ability of the mounting assembly to grip a tool so as to resist rotation of the tool relative to the assembly about the longitudinal rotational axis.

Each pressure adjuster may comprise a cylinder and a piston which is slideable within the cylinder, and an adjustment mechanism for varying the position of the piston in the cylinder and for retaining the piston in a selected position, and wherein a fluid path is defined between each cylinder and the respective chamber.

Preferably each adjustment mechanism includes a user operable control which enables a user to adjust the pressure within the associated chamber. In embodiments including an end plate, each control may be carried by the end plate.

The present invention further provides a method of mounting a tool on a rotary drive of a machine tool using a tool mounting assembly as described herein, comprising the steps of:
providing the tool adjacent to the engagement surface; and
selectively increasing the respective pressure of a flowable material in each of the chambers to hold the tool on the engagement surface.

### Brief description of the Drawings

Embodiments of the invention will now be described by way of example and with reference to the accompanying schematic drawings, wherein:
Figure 1 is a perspective view of a grinding wheel mounted on a tool mounting assembly embodying the invention;
Figure 2 is a partially cut-away perspective view of a mount body of the assembly shown in Figure 1;
Figure 3 is a perspective view of part of the mount body of the assembly of Figure 1 modelled using finite element analysis;
Figure 4 is a transverse cross-sectional view of part of the assembly and wheel shown in Figure 1;
Figure 5 is an end view of the assembly wheel combination of Figure 1;
Figure 6 a side view of the assembly and wheel configuration of Figure 1; and
Figure 7 is a cross-sectional side view of the assembly and wheel configuration of Figure 1 along the line marked E-E in Figure 5.

### Detailed description of the drawings

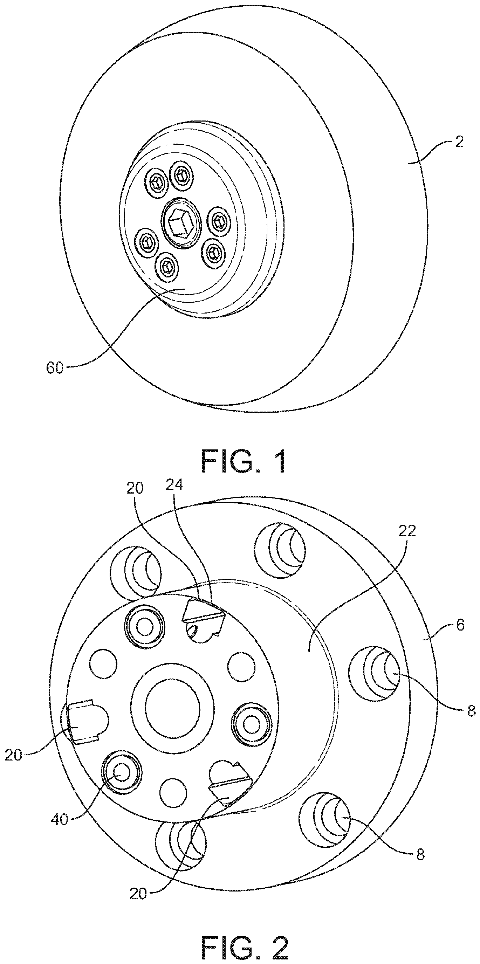

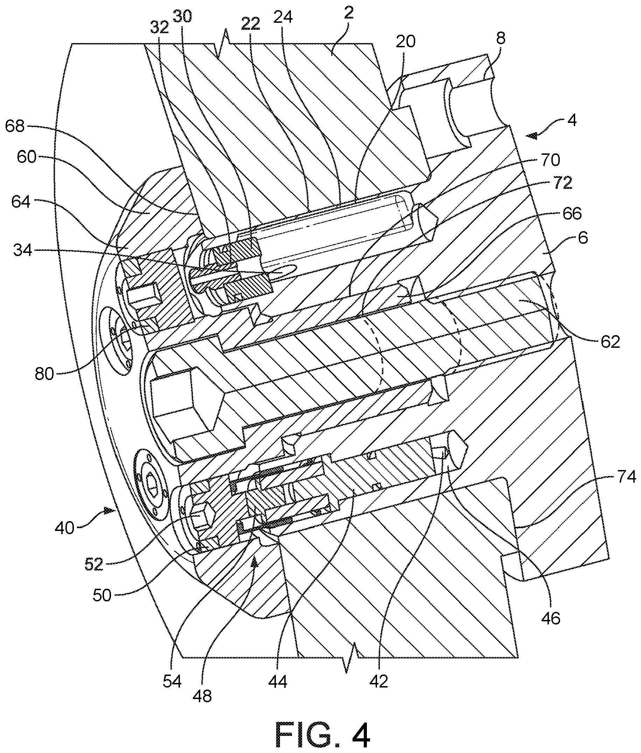

A tool mounting assembly embodying the invention is depicted in Figures 1 to 7. This embodiment is adapted to carry a grinding wheel 2.

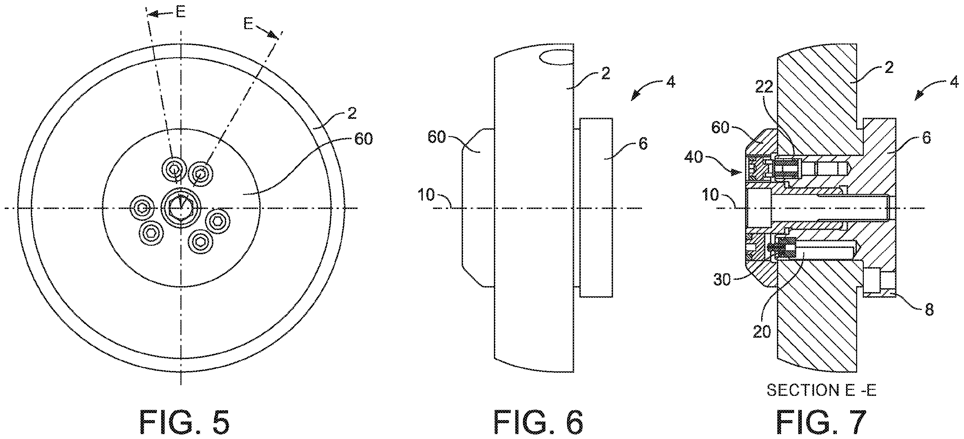

The assembly 4 comprises a mount having a mount body 6. The mount body includes mounting holes 8 to enable the mount body to be fastened to a rotary drive of a machine tool for rotation about its longitudinal axis 10 (this axis is marked on Figures 6 and 7).

Holes (not shown in the Figures) may be formed in the mount body for receiving locating pins or dowels which are received in holes formed in the rotary drive (or in the spindle nose of a rotary drive for example where the mount body acts as an adaptor between a tool and the spindle nose). This would provide further certainty in the location of the mount body in relation to the drive and further ensure repeatability of this positioning accuracy when a mount body is removed and replaced on the rotary drive.

The mount body defines three expandable chambers 20. Each chamber is elongated in the axial direction.

The mount body defines a cylindrical engagement surface 22 for engagement with a central opening in the grinding wheel 2.

Each chamber extends close to the engagement surface so that a relatively thin wall 24 of material forms part of the engagement surface on one side and part of the chamber 20 on the other.

This wall thickness may be around 1mm for example. The wall thickness for a particular application will depend on the length of the chamber and the diameter of the mount body.

In alternative embodiments, each chamber may be defined by a part separate from the mount body which is inserted into a corresponding cavity or groove defined by the mount body. This sub-assembly may form part of the engagement surface 22 itself. Alternatively, it may be provided close to the engagement surface so as to be able to deform a wall 24 formed by the mount body.

An outer end of each chamber is closed by a closure 30. Each closure includes a filling nipple or valve 32. In use, each chamber is filled and bled via the filling nipple 32 with a suitable flowable material. This material may for example be an oil, grease, powder or other material that can be displaced and flow in a substantially uniform, homogenous manner and be resistant to compression.

Each chamber is coupled via a flow path or gallery to an associated pressure adjuster 40. The pressure adjuster is operable to adjust the pressure of the flowable material in the associated chamber. The flow path is coupled to the chamber via a port 34 and to the pressure adjuster via a port 42.

The pressure adjuster 40 comprises a piston 44 which is slideable within a cylinder 46 defined by the mount body. An adjustment mechanism 48 is provided to vary position of the piston within the cylinder and to retain it in a selected position.

Each adjustment mechanism 48 includes a user-operated control 50 which enables the user to adjust the position of the piston 44 within the cylinder 46. In this way, the user is able to adjust the pressure of flowable material within the cylinder and therefore within the associated chamber 20. In the illustrated embodiment, the control is in the form of a rotatable member. By way of example, it includes a socket 52 for insertion of a tool by a user to facilitate rotation of the control.

The adjustment mechanism includes an arrangement which converts rotational movement of the control 50 into a linear movement which is transferred to the piston 44. It will be appreciated that this can be achieved in a number of ways, for example, by means of a screw thread or cam surface. For example, control 50 may have a screw thread formed on its periphery which is in engagement with a complementary thread formed on the mount body. Alternatively, a cam surface may be formed on an inner end of the control which engages with a cam following surface of a further component 54 of the adjustment mechanism.

Provision of a pressure adjuster in association with each chamber allows the pressure within each chamber to be adjusted independently of the others to give close control of the mounting of a tool on the tool mounting assembly.

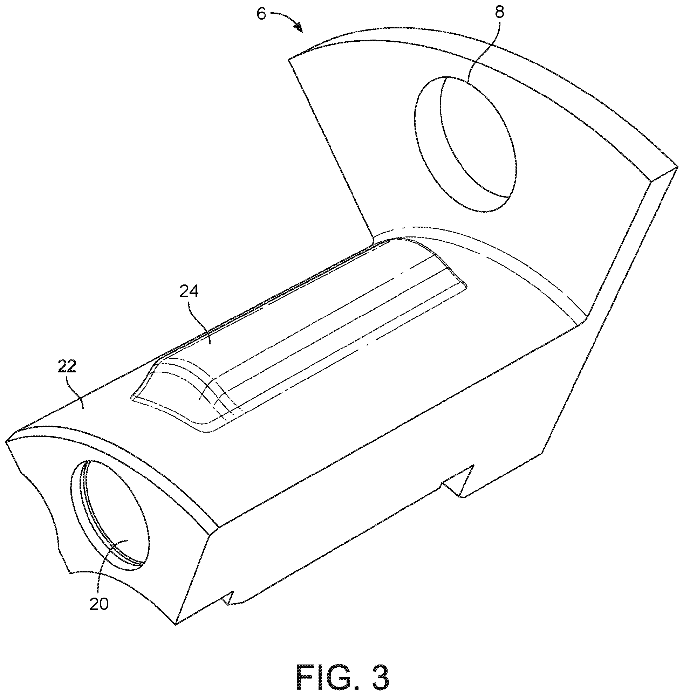

Figure 3 has been generated by modelling the deformation of a mount body in a tool mounting assembly embodying the invention using finite element analysis. It can be seen that the thin wall 24 forming part of the engagement surface 22 has been deformed radially outwardly in those portions which are mechanically coupled to a respective expandable chamber 20. The extent of the deformation is exaggerated in the drawing for the purposes of illustration.

The tool mounting assembly depicted in the drawings also includes an end plate 60. In the embodiment illustrated, the end plate is fastened to the mount body by a bolt 62. The end plate comprises a radially extending flange portion 64 having a greater diameter than the engagement surface 22. It also includes an axially extending central portion 66. The flange portion 64 defines a transverse surface 68 for engagement with a tool carried by the tool mounting assembly. The axially extending portion 66 is received in a complementary recess 70 defined by the mount body. The bolt 62 is coaxial with the longitudinal axis of the mount and is received in an aperture 72 which extends through both the flange portion 64 and the axially extending portion 66 of the end plate. A threaded end portion of the bolt 62 engages with a complementary thread formed on the mount body.

Instead of using a single bolt 62 to fasten the end plate to the mount body which is located in the centre of the end plate, a plurality of bolts could be used. For example, a ring of bolts could be provided. Each bolt would preferably be located between each of the chamber and adjuster combinations, to avoid the fluid path required between the chamber and adjuster of each combination. The use of a plurality of bolts rather than a single one may enable the fastening forces to be applied more uniformly to the end plate and/or allow a greater fastening force to be applied to the end plate. However, the use of a single bolt may be more suitable for use with an automated tool mounting system as the fastening process would be simpler.

The end plate serves to retain, but not intimately clamp a tool mounted on the tool mounting assembly between its inwardly facing transverse surface 68 and a transverse surface 74 defined by the mount body. In this way, the end plate acts as a safety feature, preventing a tool from separating from the mount in the event of failure of one of the chambers. Preferably, it does not clamp the tool in place, so that it does not impede the centering and clamping forces exerted on the tool by the expandable chambers. Instead it closely retains the tool in the axial direction.

In the illustrated embodiment, the end plate carries the user-operable controls 50. It also carried closures 80 for providing a seal over filling nipple 32. Closures 80 are threadably engaged with the end plate to allow access to the filling nipple as and when required.

A tool may be removed from the tool mounting assembly manually or using an automated wheel changing system.

The mount body may for example be formed from a high quality nitriding steel which is hardened and tempered to give good fatigue resistance in the deformable regions.

## Claims

1. A tool mounting assembly (4) for coupling a tool (2) to a rotary drive of a machine tool, the assembly comprising:
a mount (6) having a longitudinal axis (10) and axially inner and outer ends, the mount defining an engagement surface (22) for engaging with a tool to be rotated about the longitudinal axis, and at least three independently expandable chambers (20) within the mount for receiving a flowable material,
wherein each chamber is mechanically coupled to a respective portion (24) of the engagement surface, such that an increase in the pressure within the chamber above a predetermined threshold expands the chamber, which causes the coupled portion of the engagement surface to move in a radial direction relative to the longitudinal axis,
**characterised in that**
the assembly includes an end plate (60) and a fastening arrangement (62) for fastening the end plate to the mount in order to retain a tool (2) between an axially inwardly facing transverse surface (68) of the end plate and a transverse surface (74) of the mount (6).

2. An assembly of claim 1, wherein the coupled portions (24) of the engagement surface (22) are substantially equally spaced around the engagement surface in a circumferential direction around the longitudinal axis (10).

3. An assembly of claim 1 or claim 2, wherein the engagement surface (22) is a radially outwardly facing surface and the radial direction is radially outwards.

4. An assembly of any preceding claim, wherein the engagement surface (22) is cylindrical for engaging with a central opening of a grinding wheel (2).

5. An assembly of claim 1 or claim 2, wherein the engagement surface is a radially inwardly facing surface and the radial direction is radially inwards.

6. An assembly of any preceding claim, wherein the mount has a mount body (6) and each of the chambers (20) is defined by the mount body.

7. An assembly of any preceding claim, wherein a wall (24) of each chamber forms the respective coupled portion of the engagement surface (22), and the wall is resiliently deformable.

8. An assembly of any of claims 1 to 5, wherein each chamber (20) is defined by a respective sub-assembly which is provided within the mount body (6).

9. An assembly of any preceding claim, wherein each coupled portion (24) of the engagement surface is elongated in the axial direction.

10. An assembly of any preceding claim, wherein each chamber (20) has a respective pressure adjuster (40) which is operable to adjust the pressure of a flowable material in the associated chamber.

11. An assembly of claim 10, wherein each pressure adjuster (40) comprises a cylinder (46) and a piston (44) which is slideable within the cylinder, and an adjustment mechanism (48) for varying the position of the piston in the cylinder and for retaining the piston in a selected position, and wherein a fluid path is defined between each cylinder and the respective chamber.

12. An assembly of claim 11, wherein each adjustment mechanism (48) includes a user operable control (50) which enables a user to adjust the pressure within the associated chamber.

13. An assembly of claim 12, wherein each control (50) is carried by the end plate (60).

14. A method of mounting a tool (2) on a rotary drive of a machine tool using a tool mounting assembly of any preceding claim, comprising the steps of:
providing the tool adjacent to the engagement surface (22); and
selectively increasing the respective pressure of a flowable material in each of the chambers (20) to hold the tool on the engagement surface.

## Patentansprüche

1. Werkzeugmontagebaugruppe (4) zum Ankoppeln eines Werkzeugs (2) an einen Drehantrieb eines Maschinenwerkzeugs, wobei die Baugruppe umfasst:
eine Halterung (6) mit einer Längsachse (10) und einem axial inneren und einem axial äußeren Ende, wobei die Halterung eine Eingriffsfläche (22) zum Eingreifen in ein um die Längsachse zu drehendes Werkzeug und mindestens drei unabhängig erweiterbare Kammern (20) innerhalb der Halterung zur Aufnahme eines fließfähigen Materials definiert,
wobei jede Kammer mechanisch mit einem jeweiligen Abschnitt (24) der Eingriffsfläche gekoppelt ist, derart dass eine Druckerhöhung innerhalb der Kammer über eine vorbestimmte Schwelle die Kammer erweitert, was bewirkt, dass der gekoppelte Abschnitt der Eingriffsfläche sich in einer radialen Richtung in Bezug auf die Längsachse bewegt,
**dadurch gekennzeichnet, dass**
die Baugruppe eine Endplatte (60) und eine Befestigungsanordnung (62) zum Befestigen der Endplatte an der Halterung umfasst, um ein Werkzeug (2) zwischen einer axial nach innen gerichteten Querfläche (68) der Endplatte und einer Querfläche (74) der Halterung (6) festzuhalten.

2. Baugruppe nach Anspruch 1, wobei die gekoppelten Abschnitte (24) der Eingriffsfläche (22) in einem im Wesentlichen gleichen Abstand um die Eingriffsfläche in Umfangsrichtung um die Längsachse (10) angeordnet sind.

3. Baugruppe nach Anspruch 1 oder 2, wobei die Eingriffsfläche (22) eine radial nach außen gerichtete Fläche ist und die radiale Richtung radial nach außen ist.

4. Baugruppe nach einem der vorhergehenden Ansprüche, wobei die Eingriffsfläche (22) zylindrisch ist, um in eine mittige Öffnung eines Schleifrads (2) einzugreifen.

5. Baugruppe nach Anspruch 1 oder 2, wobei die Eingriffsfläche eine radial nach innen gerichtete Fläche ist und die radiale Richtung radial nach innen ist.

6. Baugruppe nach einem der vorhergehenden Ansprüche, wobei die Halterung einen Halterungskörper (6) aufweist und jede der Kammern (20) durch den Halterungskörper definiert ist.

7. Baugruppe nach einem der vorhergehenden Ansprüche, wobei eine Wand (24) jeder Kammer den jeweiligen gekoppelten Abschnitt der Eingriffsfläche (22) bildet und die Wand elastisch verformbar ist.

8. Baugruppe nach einem der Ansprüche 1 bis 5, wobei jede Kammer (20) durch eine jeweilige Unterbaugruppe definiert ist, die innerhalb des Halterungskörpers (6) vorgesehen ist.

9. Baugruppe nach einem der vorhergehenden Ansprüche, wobei jeder gekoppelte Abschnitt (24) der Eingriffsfläche in der axialen Richtung verlängert ist.

10. Baugruppe nach einem der vorhergehenden Ansprüche, wobei jede Kammer (20) eine jeweilige Druckeinstellvorrichtung (40) aufweist, die zum Einstellen des Drucks eines fließfähigen Materials in der zugehörigen Kammer ausgelegt ist.

11. Baugruppe nach Anspruch 10, wobei die Druckeinstellvorrichtung (40) einen Zylinder (46) und einen Kolben (44), der innerhalb des Zylinders verschiebbar ist, und einen Einstellmechanismus (48) zum Ändern der Position des Kolbens im Zylinder und zum Halten des Kolbens in einer ausgewählten Position umfasst, und wobei ein Fluidpfad zwischen jedem Zylinder und der jeweiligen Kammer definiert ist.

12. Baugruppe nach Anspruch 11, wobei jeder Einstellmechanismus (48) ein von einem Benutzer bedienbares Steuerelement (50) umfasst, das einen Benutzer zum Einstellen des Drucks innerhalb der zugehörigen Kammer befähigt.

13. Baugruppe nach Anspruch 12, wobei jedes Steuerelement (50) von der Endplatte (60) getragen wird.

14. Verfahren zum Montieren eines Werkzeugs (2) auf einem Drehantrieb eines Maschinenwerkzeugs unter Verwendung einer Werkzeugmontagebaugruppe nach einem der vorhergehenden Ansprüche, umfassend die folgenden Schritte:
Bereitstellen des Werkzeugs benachbart zur Eingriffsfläche (22); und
selektives Erhöhen des jeweiligen Drucks eines fließfähigen Materials in jeder der Kammern (20), um das Werkzeug auf der Eingriffsfläche zu halten.

## Revendications

1. Assemblage de montage d'outil (4) pour coupler un outil (2) à un entraînement rotatif d'une machine-outil, l'assemblage comprenant :
une monture (6) ayant un axe longitudinal (10) et des extrémités axialement intérieures et extérieures, la monture définissant une surface d'engagement (22) pour s'engager avec un outil à faire tourner autour de l'axe longitudinal, et au moins trois chambres extensibles de manière indépendante (20) à l'intérieur de la monture pour recevoir un matériau fluide,
où chaque chambre est couplée mécaniquement à une partie respective (24) de la surface d'engagement, de sorte qu'une augmentation de la pression à l'intérieur de la chambre au-delà d'un seuil prédéterminé dilate la chambre, ce qui entraîne le déplacement de la partie couplée de la surface d'engagement dans une direction radiale par rapport à l'axe longitudinal,
**caractérisé en ce que** :
l'assemblage comprend une plaque d'extrémité (60) et un agencement de fixation (62) pour fixer la plaque d'extrémité à la monture afin de retenir un outil (2) entre une surface transversale (68) de la plaque d'extrémité orientée axialement vers l'intérieur et une surface transversale (74) de la monture (6).

2. Assemblage selon la revendication 1, dans lequel les parties couplées (24) de la surface d'engagement (22) sont sensiblement également espacées autour de la surface d'engagement dans une direction circonférentielle autour de l'axe longitudinal (10).

3. Assemblage selon la revendication 1 ou la revendication 2, dans lequel la surface d'engagement (22) est une surface orientée radialement vers l'extérieur et la direction radiale s'étend radialement vers l'extérieur.

4. Assemblage selon l'une quelconque des revendications précédentes, dans lequel la surface d'engagement (22) est cylindrique pour s'engager dans l'ouverture centrale d'un disque de meulage (2).

5. Assemblage selon la revendication 1 ou la revendication 2, dans lequel la surface d'engagement est une surface orientée radialement vers l'intérieur, et la direction radiale est radialement dirigée vers l'intérieur.

6. Assemblage selon l'une quelconque des revendications précédentes, dans lequel la monture comporte un corps de monture (6) et chacune des chambres (20) est définie par le corps de monture.

7. Assemblage selon l'une quelconque des revendications précédentes, dans lequel une paroi (24) de chaque chambre forme la partie couplée respective de la surface d'engagement (22), et la paroi est déformable de manière élastique.

8. Assemblage selon l'une quelconque des revendications 1 à 5, dans lequel chaque chambre (20) est définie par un sous-assemblage respectif qui est fourni à l'intérieur du corps de monture (6).

9. Assemblage selon l'une quelconque des revendications précédentes, dans lequel chaque partie couplée (24) de la surface d'engagement est allongée dans la direction axiale.

10. Assemblage selon l'une quelconque des revendications précédentes, dans lequel chaque chambre (20) possède un dispositif de réglage de la pression (40) qui permet d'ajuster la pression d'un matériau fluide dans la chambre associée.

11. Assemblage selon la revendication 10, dans lequel chaque dispositif de réglage de la pression (40) comprend un cylindre (46) et un piston (44) qui peut coulisser dans le cylindre, et un mécanisme de réglage (48) pour faire varier la position du piston dans le cylindre et pour maintenir le piston dans une position sélectionnée, et où un chemin de fluide est défini entre chaque cylindre et la chambre respective.

12. Assemblage selon la revendication 11, dans lequel chaque mécanisme de réglage (48) comprend une commande actionnable par l'utilisateur (50) qui permet à l'utilisateur de régler la pression à l'intérieur de la chambre associée.

13. Assemblage selon la revendication 12, dans lequel chaque commande (50) est portée par la plaque d'extrémité (60).

14. Procédé de montage d'un outil (2) sur un entraînement rotatif d'une machine-outil à l'aide d'un assemblage de montage d'outil selon l'une quelconque des revendications précédentes, le procédé comprenant les étapes suivantes :
présenter l'outil de manière adjacente par rapport à la surface d'engagement (22) ; et
augmenter sélectivement la pression respective d'un matériau fluide dans chacune des chambres (20) pour maintenir l'outil sur la surface d'engagement.
